# EUROPÄISCHE PATENTSCHRIFT

(11) **EP 1 144 455 B1**
(45) Veröffentlichungstag und Bekanntmachung des Hinweises auf die Patenterteilung: **24.09.2003**
(21) Anmeldenummer: 99953527.1
(22) Anmeldetag: 13.08.1999
(51) Int. Cl.: C08B 1/00

(54) **VERFAHREN ZUR HERSTELLUNG EINER CELLULOSESUSPENSION**
METHOD FOR PRODUCING A CELLULOSE SUSPENSION
PROCEDE DE PREPARATION D'UNE SUSPENSION DE CELLULOSE

(30) Priorität: 17.08.1998 DE 19837210
(43) Veröffentlichungstag der Anmeldung: 17.10.2001
(73) Patentinhaber: Alceru Schwarza GmbH, 07407 Rudolstadt (DE)
(72) Erfinder: BLECH, Marco, D-55252 Mainz-Kastel (DE); KAGALOWSKI, Leo, D-60322 Frankfurt/Main (DE); KIND, Uwe, D-07407 Rudolstadt (DE)
(74) Vertreter: Brandenburg, Thomas, Dr.
(86) Internationale Anmeldenummer: DE9902583
(87) Internationale Veröffentlichungsnummer: WO00009563

(56) Entgegenhaltungen:
- EP-A- 0 356 419
- WO-A-95/11261
- WO-A-97/47790
- DD-A- 226 573

## Beschreibung

Die Erfindung betrifft ein Verfahren zur kontinuierlichen Herstellung einer Suspension von Cellulose in wasserhaltigem N-Methylmorpholin-N-oxid. Diese Suspension kann thermisch in eine Celluloselösung überführt werden, die durch Verformung und Regeneration zu cellulosischen Formkörpern, wie Fasern, Filamenten und Folien verarbeitet werden kann.

Es ist bekannt, eine Cellulosesuspension in wässrigem N-Methylmorpholin-N-oxid herzustellen, indem die zerkleinerte Cellulose direkt mit dem wässrigen N-Methylmorpholin-N-oxid (NMMO) gemischt wird. Nach WO 96/33221 wird die Cellulose in einem Ringschichtmischer mit wässrigem, z.B. 75 Masse-%igem NMMO gemischt. Die gebildete Suspension wird in einem separaten Filmtruder zur Lösung gebracht. Nachteilig bei dem Ringschichtmischer ist, daß nur eine zerkleinerte, im wesentlichen trockene Cellulose eingesetzt werden kann. Ist dagegen die Cellulose z.B. von einer Vorbehandlung her wasserhaltig, wird die Schichtbildung in dem Mischer und die Vermischung mit der getrennt zugegebenen NMMO-Lösung erschwert, zumal das Scherfeld in dem Schichtmischer begrenzt ist. Da die Suspension als Schicht transportiert wird, ist der auf den Apparatequerschnitt bezogene Durchsatz gering.

Aus WO 94/28217 ist ein diskontinuierliches Verfahren zur Herstellung einer Suspension von Cellulose in wässrigem Aminoxid bekannt. Hierbei wird zerkleinerte Cellulose und eine Aminoxidlösung in einer horizontalen Mischkammer durch einen Rotor mit radialen Rührelementen gemischt. Als Zeitdauer für eine Charge ist 21 Minuten angegeben. Diese Arbeitsweise ist nachteilig, weil wegen der kontinuierlichen Beaufschlagung des nachfolgenden Lösers zwei solche Mischkammern betrieben werden müssen. Außerdem ist die vollständige Entleerung der Mischkammer mit Schwierigkeiten verbunden.

Der vorliegenden Erfindung liegt die Aufgabe zugrunde, ein Verfahren zur kontinuierlichen Herstellung einer Suspension von Cellulose in wasserhaltigem N-Methylmorpholin-N-oxid ohne die oben genannten Nachteile zu schaffen. Das Verfahren soll den Einsatz von wasserhaltiger Cellulose oder trockener Cellulose erlauben, wobei Schwankungen der Teilchengröße und/oder des Wassergehalts der eingesetzten Cellulose egalisiert werden sollen, so daß in der nachfolgenden Lösestufe eine Lösung von gleichbleibender Cellulosekonzentration entsteht. Weiter soll ein kontinuierliches Verfahren mit auf den Apparatequerschnitt bezogener erhöhter Erzeugung an Suspensionsvolumen geschaffen werden. Schließlich soll ein Verfahren zur kontinuierlichen Herstellung einer Cellulosesuspension geschaffen werden, die unmittelbar kontinuierlich in eine Lösestufe zur Bildung einer extrudierbaren Lösung überführt werden kann. Weitere Vorteile ergeben sich aus der folgenden Beschreibung.

Diese Aufgabe wird bei dem eingangs genannten Verfahren erfindungsgemäß dadurch gelöst, daß man (a) die Cellulose in Abwesenheit von N-Methylmorpholin-N-oxid unter Homogenisierung durch eine erste Scherzone fördert und (b) die homogenisierte Cellulose nach Zugabe von soviel wasserhaltigem N-Methylmorpholin-N-oxid, daß sich nach der Mischung eine Suspension mit einem N-Methylmorpholin-N-oxid-Gehalt in der flüssigen Phase in dem Bereich von 70 bis 80 Masse-% ergibt, durch eine zweite Scherzone fördert, wobei die Cellulose bzw. die Suspension den verfügbaren Förderquerschnitt in den Scherzonen im wesentlichen vollständig ausfüllt.

Erfindungsgemäß wird zunächst die eingesetzte Cellulose in der Stufe (a) in bezug auf ihre Teilchengröße und/oder ihren Wassergehalt homogenisiert, d.h. lokale und zeitliche Schwankungen dieser beiden Größen verschwinden mit dem Ergebnis, daß Schwankungen der Cellulosekonzentration der in der folgenden Stufe gebildeten Lösung und eine zum Teil unvollständige Lösung der Cellulose vermieden werden. Das in der Stufe (b) zugegebene NMMO wird nach Menge und Wassergehalt so auf die Menge und den evtl. Wassergehalt der eingesetzten Cellulose abgestimmt, daß der NMMO-Gehalt in der flüssigen Phase der gebildeten Suspension in dem oben genannten Zielbereich von 70 bis 80 Masse-% liegt. Wenn beispielsweise in die Stufe (a) eine trockene Cellulose eingesetzt wird, kann die in Stufe (b) eingesetzte NMMO-Lösung eine Konzentration in dem genannten Bereich haben. Wenn in Stufe (a) eine wasserhaltige Cellulose eingesetzt wird, ist in Stufe (b) je nach der Cellulosekonzentration der herzustellenden Lösung eine konzentriertere NMMO-Lösung einzubringen. Mit Hilfe eines Cellulose/NMMO/H₂0-Dreiecksdiagramms lassen sich die zu wählenden Mengen und Konzentrationen der wasserhaltigen Cellulose und der NMMO-Lösung leicht ermitteln. Die Suspension kann unmittelbar der Stufe der Bildung einer homogenen Celluloselösung zugeführt werden. Dabei können zur Lösung unterschiedliche Verfahrensvarianten zur Anwendung kommen. Ein geeignetes Verfahren ist in DE 44 41 468 beschrieben. Anders als bei dem eingangs genannten Verfahren, bei dem die Suspension in Form einer Ringschicht gefördert wird, wird bei dem erfindungsgemäßen Verfahren der gesamte für die Förderung verfügbare freie Querschnitt ausgenutzt, so daß je Zeiteinheit und Querschnittsflächeneinheit des Apparats ein maximales Suspensionsvolumen durchgesetzt werden kann. Außerdem sind bei dem vorliegenden Verfahren die hohen Wellendrehzahlen des Ringschichtverfahrens nicht erforderlich. Unter der vollständigen Ausfüllung im Sinne der Erfindung ist zu verstehen, daß anders als bei dem eingangs genannten Ringschichtverfahren eine durchgängige Dampf oder Gasphase im Bereich zwischen Eingang der Cellulose und Ausgang der gebildeten Suspension nicht vorhanden ist. Einzelne Luft- oder Dampfblasen können in der geförderten Masse gleichwohl vorhanden sein. Die bei dem erfindungsgemäßen Verfahren erreichte gleichmäßigere Verteilung in der schließlich erhaltenen Cellulosesuspension begünstigt die restlose Auflösung der Celluloseteilchen in der Lösestufe.

Nach der bevorzugten Ausführungsform des erfindungsgemäßen Verfahrens erfolgt die Scherung und Förderung in den beiden Scherzonen durch mehrere in Förderrichtung angeordnete, mit Scher- und Förderelementen bestückte Wellen. Die Ausbildung der Scher- und Förderelemente ist in beiden Zonen gleich. Der Übergang von der ersten in die zweite Scherzone wird nur durch die Zugabestelle der NMMO-Lösung bestimmt und kann durch Versetzen dieser Stelle in axialer Richtung verschoben werden. Im allgemeinen ist die erste Scherzone kürzer als die zweite Scherzone. Beispielsweise kann das Verhältnis ihrer Längen 1:2 betragen. Die Scherung kann durch unterschiedliche Drehzahlen der Wellen erreicht werden. Es hat sich gezeigt, daß durch die Homogenisierung in Abwesenheit des NMMO eine Verbesserung der Celluloseauflösung in der Lösestufe erzielt wird. Im allgemeinen sieht man für die Scherung und Förderung zwei bis sieben Wellen mit den entsprechenden Scher- und Förderelementen vor.

Bei einer Ausführungsform des Verfahrens setzt man in der Stufe (a) eine Cellulose mit einem Wassergehalt in dem Bereich von 20 bis 80 Masse-% ein. Diese beim Einsatz insbesondere im Wassergehalt schwankende Cellulose wird durch die Stufe (a) bezüglich des Wassergehalts vergleichmäßigt. Da der NMMO-Gehalt der erzeugten Suspension in dem angegebenen Zielbereich liegen soll, erfordert der Wassergehalt der Cellulose entsprechend gegenläufige Anpassung des Wassergehalts der NMMO-Lösung. Da in die Stufe (b) häufig eine aus verbrauchtem Fällbad aufbereitete Regeneratlösung eingesetzt wird, kann die Fällbadregenerierung auf die Bildung eines NMMO-Konzentrats der benötigten Konzentration abzielen. Durch die Scherung in den Stufen (a) und (b) wird auch eine Zerkleinerung und Homogenisierung der Celluloseteilchen erreicht, die bei dem bekannten Ringschichtmischer nicht möglich ist.

Bei einer anderen Ausführungsform setzt man in der Stufe (a) eine im wesentlichen trockene Cellulose ein. Auch in diesem Falle erfolgt in der Stufe (a) eine Homogenisierung durch eine Vergleichmäßigung der Teilchengrößen. Dieser Vorgang setzt sich in der anschließenden Stufe (b) fort. Der Einsatz trockener Cellulose ist auch in Kombination mit wasserhaltiger Cellulose angezeigt, wenn der Wassergehalt der letzteren so hoch liegt, wie z.B. 60 bis 80%, daß in Stufe (b) durch die Zugabe von NMMO-Monohydrat der Zielbereich des NMMO-Gehalts in der flüssigen Phase der Suspension nicht zu erreichen ist. Wegen der mit der Scherung verbundenen Zerkleinerung entfällt eine vorherige Mahlung bzw. Zerkleinerung der Cellulose.

Nach der bevorzugten Ausführungsform setzt man in der Stufe (b) ein wasserhaltiges NMMO mit einem Molverhältnis NMMO/H₂O in dem Bereich zwischen 1:1 und 1:2,2 ein. Das konzentrierteste NMMO, das im allgemeinen zum Einsatz kommt, nämlich NMMO-MH, wird bei wasserhaltigen Cellulosen zur Anwendung kommen, die vor der erfindungsgemäßen Suspendierung beispielsweise mit Wasser aufgeschlagen und/oder enzymatisch oder thermisch vorbehandelt wurden. Neben der Vergleichmäßigung der Teilchengröße wie bei Einsatz trockener Cellulose wird zusätzlich auch eine Vergleichmäßigung des Wassergehalts erreicht, wodurch die folgende Mischung mit dem Aminoxid begünstigt wird.

Zweckmäßigerweise führt man die Stufen (a) und (b) bei einer Temperatur in dem Bereich von 75 bis 100°C durch. Bei diesen Temperaturen sind der Celluloseabbau und die Zersetzung des Aminoxids gering; andererseits wird die Homogenisierung und gleichmäßige Durchmischung der feuchten Cellulose mit dem NMMO-Konzentrat durch die genannte erhöhte Temperatur begünstigt. Die temperierte Suspension kann ohne wesentliche Temperaturänderung in einer anschließenden Stufe durch Wasserverdampfung unter Vakuum zur Lösung gebracht werden.

Nach der bevorzugten Ausführungsform des erfindungsgemäßen Verfahrens führt man die beiden Stufen (a) und (b) in kontinuierlichem Durchlauf durch und zieht die Suspension am Ende der Stufe (b) kontinuierlich ab und leitet sie in eine Lösestufe ein. Die am Eingang eingegebene, ggfs. wasserhaltige Cellulose wird unter Scherung kontinuierlich durch den Apparat transportiert, wobei nach einer die erste Stufe (a) darstellenden Förderstrecke das wässrige NMMO zugesetzt wird, wobei die sich dann anschließende Förderstrecke die Stufe (b) bildet. Da das erfindungsgemäße Verfahren kontinuierlich abläuft, kann die gebildete Suspension in die kontinuierliche Lösestufe eingeleitet werden, ohne daß ein zwischengelagerter Pufferbehälter nötig ist. Im allgemeinen arbeitet man in den Stufen (a) und (b) mit einer gesamten Verweilzeit in dem Bereich von 5 bis 60 min. Der bevorzugte Verweilzeitbereich liegt bei etwa 20 bis 30 min.

Man kann dem geförderten Material Zusatzstoffe, wie z.B. Stabilisatoren zugeben. Diese Zusatzstoffe werden im Zuge der Homogenisierung, Mischung und Lösung ebenfalls gleichmäßig in der Suspension bzw. Spinnlösung verteilt.

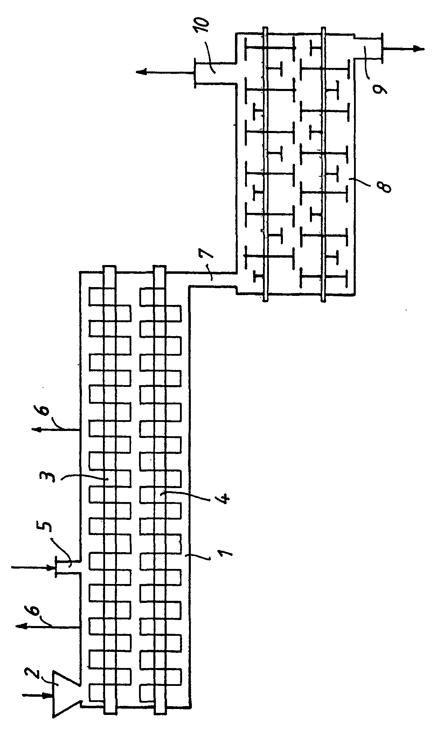

Die Erfindung wird nun an Hand der Zeichnung und durch die Beispiele näher erläutert.

Die Figur zeigt schematisch eine Anlage zur Durchführung des erfindungsgemäßen Verfahrens mit einem angeschlossenen Apparat zur Lösungsbildung. Der erste Doppelwellenapparat 1 wird über einen Trichter 2 mit auf einen Feuchtigkeitsgehalt von 50 Masse-% abgepresster Cellulose aus einer enzymatischen Vorbehandlungsanlage beschickt. In dem Apparat 1 sind mehrere Wellen mit Scher- und Förderelementen angeordnet, von denen zwei Wellen 3,4 in der Zeichnung dargestellt sind. In einer ersten Scherzone, die etwa über das erste Drittel der Gesamtlänge beider Zonen reicht, sind die Wellen für die Scherung der aufgegebenen Cellulose eingerichtet. Nach etwa 1/3 der Apparatelänge befindet sich an dem Zylindergehäuse eine Aufgabeöffnung 5 für das wasserhaltige NMMO. Luft mit etwas Wasserdampf wird durch die Leitungen 6 abgezogen. Der Apparat ist am Abströmende durch ein Rohr 7 mit einem Mehrwellenlöser 8 verbunden, der als Lösestation dient. Die Suspension wird durch die Aufbauten der Wellen unter Scherung und Auflösung der Cellulose zum Auslaßstutzen 9 transportiert. Der Löser 8 wird durch den Stutzen 10 unter Unterdruck gehalten, wodurch Wasser aus der Suspension verdampft und aus dem Löser 8 abgezogen wird. Beide Apparate 1 und 8 sind mit einem Heizmantel (nicht dargestellt) versehen, so daß die gewünschte Misch- bzw. Lösungstemperatur eingehalten werden kann.

### Beispiel 1

In einem Pulper werden 10 kg atro eines Fichtensulfitzellstoffs (Cuoxam DP 465; α-Cellulosegehalt> 95%) mit Weichwasser im Flottenverhältnis von 1:20 aufgeschlagen und homogenisiert. Mit Hilfe einer Dickstoffpumpe wird die Suspension in eine Stoffbütte gepumpt, auf eine Stoffdichte von 10 g/l verdünnt und bei einer Temperatur von 50°C mit 0,1 Masse-% Enzym, bezogen auf Cellulose versetzt. Nach einer Behandlungsdauer von 2 Stunden wird die Cellulose auf einer Naßvliesanlage abgepreßt, wobei man ein Zellstoffvlies mit einem Feststoffgehalt von 50% erhält. Einem Zweizonen-Doppelwellenapparat werden über einen Eingabeschacht 158 g/min des Zellstoffvlieses kontinuierlich zugeführt. In der ersten Zone des Doppelwellenapparats wird das Cellulose/Wasser-Gemisch bei 90°C homogenisiert. Über eine beheizte Zulaufleitung werden dem homogenisierten Gemisch in einer zweiten Zone des Doppelwellenapparats 537 g/min N-Methylmorpholin-N-oxid-Monohydrat zugegeben. In der folgenden Scherzone wird die Cellulose/Wasser-Suspension mit dem NMMO-MH gleichmäßig vermischt. Es entsteht eine Maische mit einem Gehalt von 81,6 % NMMO-MH. Di-ese Maische wird in einer folgenden Verdampfungsstufe in eine Spinnlösung mit 13,6 % Cellulose überführt.

Die Qualitätsbeurteilung der Spinnlösung erfolgt durch ein Mikroskop (Fa. Hund H500 WZ) mit Auswertungseinheit (Videokamera und Printer der Fa. JVC). Die Anzahl der ungelösten Celluloseteilchen der Spinnlösungsprobe wird je 1 cm² angegeben. Es gilt folgende Qualitätseinstufung:

| Anzahl der ungelösten Cell.-Teilchen/cm² | Benotung |
|---|---|
| 0 bis 5 | 1 |
| 6 bis 10 | 2 |
| 11 bis 15 | 3 |
| > 15 | nicht verspinnbar |

Die Spinnlösung dieses Beispiels enthielt 5 ungelöste Teilchen/cm². Die Lösung war trotzdem nach Filtration zur Herstellung von Fasern, Filamenten und Folien nach dem Trocken-Naßspinnverfahren geeignet.

### Beispiel 2

Es wurde eine Spinnlösung analog dem Beispiel 1 hergestellt. Dabei wurde jedoch die Maische vor dem Eintritt in die Verdampfungsstufe zehnmal durch einen Homogenisator gedrückt.

Bei der Qualitätsbeurteilung der Spinnlösung unter dem Mikroskop konnte eine optisch reine Lösung ohne Cellulosepar ikel festgestellt werden (0 ungelöste Cell.-Teilchen/cm²).

### Beispiel 3

1,5 kg Fichtensulfi zellstoff (Cuoxam DP 780; α-Cellulosegehalt = 91 Masse-%) und 7,5 kg Wasser wurden im Autoklaven drei Stunden auf 129 °C erhitzt. Anschließend wurde die Cellulose von dem Wasser durch Zentrifugieren getrennt, wobei eine Zellstoffmasse mit einem Feststoffgehalt von 70 % anfiel. 158 g/min dieser Masse wurden in die in Beispiel 1 benutzte Anlage eingeführt, wobei jedoch der zweiten Zone 800 g/min NMMO-MH zugegeben wurden. Man erhielt eine Maische mit einem Gehalt von 83,5 % NMMO-MH und in der nachfolgenden Verdampfungsstufe eine Spinnlösung mit einem Cellulosegehalt von 12,1 Masse-%.

Bei der Qualitätsbeurteilung der Lösung unter dem Mikroskop wurden nur 3 ungelöste Celluloseteilchen/cm² festgestellt.

## Patentansprüche

1. Verfahren zur kontinuierlichen Herstellung einer Suspension von Cellulose in wasserhaltigem N-Methylmorpholin-N-oxid, **dadurch gekennzeichnet, daß** man
(a) die Cellulose in Abwesenheit von N-Methylmorpholin-N-oxid unter Homogenisierung durch eine erste Scherzone fördert und
(b) die homogenisierte Cellulose nach Zugabe von soviel wasserhaltigem N-Methylmorpholin-N-oxid, daß sich nach der Mischung eine Suspension mit einem N-Methylmorpholin-N-oxid-Gehalt in der flüssigen Phase in dem Bereich von 70 bis 80 Masse-% ergibt, durch eine zweite Scherzone fördert, wobei
die Cellulose bzw. die Suspension den verfügbaren Förderquerschnitt in den Scherzonen im wesentlichen vollständig ausfüllt.

2. Verfahren nach Anspruch 1, **dadurch gekennzeichnet, daß** die Scherung und Förderung in den beiden Scherzonen durch mehrere in Förderrichtung angeordnete, mit Scher- und Förderelementen bestückte Wellen erfolgt.

3. Verfahren nach Anspruch 2, **dadurch gekennzeichnet, daß** man für die Scherung und Förderung zwei bis acht Wellen vorsieht.

4. Verfahren nach einem der Ansprüche 1 bis 3, **dadurch gekennzeichnet, daß** man in der Stufe (a) eine Cellulose mit einem Wassergehalt in dem Bereich von 20 bis 80 Masse-% einsetzt.

5. Verfahren nach einem der Ansprüche 1 bis 4, **dadurch gekennzeichnet, daß** man in der Stufe (a) eine im wesentlichen trockene Cellulose einsetzt.

6. Verfahren nach einem der Ansprüche 1 bis 5, **dadurch gekennzeichnet, daß** man in der Stufe (b) ein wasserhaltiges NMMO mit einem Molverhältnis NMMO/H₂O in dem Bereich von 1:1 bis 1:2,2 einsetzt.

7. Verfahren nach einem der Ansprüche 1 bis 6, **dadurch gekennzeichnet, daß** man die Cellulose vor dem Einsetzen in die Stufe (a) mit Wasser aufschlägt und/oder enzymatisch oder hydrothermisch vorbehandelt.

8. Verfahren nach einem der Ansprüche 1 bis 7, **dadurch gekennzeichnet, daß** man die Stufen (a) und (b) mit einer Temperatur in dem Bereich von 75 bis 100°C durchführt.

9. Verfahren nach einem der Ansprüche 1 bis 8, **dadurch gekennzeichnet, daß** man die beiden Stufen (a) und (b) in kontinuierlichem Durchlauf durchführt und die Suspension aus Stufe (b) kontinuierlich abzieht und in eine Lösestufe einleitet.

10. Verfahren nach einem der Ansprüche 1 bis 9, **dadurch gekennzeichnet, daß** man in den Stufen (a) und (b) mit einer gesamten Verweilzeit in dem Bereich von 5 bis 60 min arbeitet.

11. Verfahren nach einem der Ansprüche 1 bis 10, **dadurch gekennzeichnet, daß** man dem geförderten Material Zusatzstoffe zugibt.

## Claims

1. A procedure to continuously produce a suspension of cellulose in aqueous N-methylmorpholine-N-oxide, **characterized in that**:
(a) The cellulose is conveyed through a first shearing zone in the absence of N-methylmorpholine-N-oxide and is homogenized, and
(b) The homogenized cellulose is conveyed through a second shearing zone after adding enough aqueous N-methylmorpholine-N- oxide for a suspension to result in a N-methylmorpholine-N-oxide content in the liquid phase of 70 - 80 weight percent after mixing, whereby
the cellulose or suspension almost completely fills the available conveyance cross-section in the shearing zones.

2. The procedure according to claim 1, **characterized in that** the cellulose is sheared and conveyed in the two shearing zones by a several shafts with shearing and conveying elements aligned in the direction of conveyance.

3. The procedure according to claim 2, **characterized in that** 2 to 8 shafts are used for shearing and conveying.

4. The procedure according to one of claims 1 - 3, **characterized in that** a cellulose with a water content ranging from 20 - 80 weight percent is used in step (a).

5. The procedure according to one of claims 1 - 4, **characterized in that** an essentially dry cellulose is used in step (a).

6. The procedure according to one of claims 1 - 5, **characterized in that** an aqueous NMMO is used in step (b) with a molar ratio of NMMO/H₂O ranging from 1:1 to 1:2.2.

7. The procedure according to one of claims 1 - 6, **characterized in that** water is added to the cellulose and/or enzymatically or hydrothermally pretreated before it is used in step (a).

8. The procedure according to one of claims 1 - 7, **characterized in that** steps (a) and (b) are carried out at a temperature ranging from 75 to 100 °C.

9. The procedure according to one of claims 1 - 8, **characterized in that** the two steps (a) and (b) are continuous, and the suspension from step (b) is continually drained and fed to a dissolving step.

10. The procedure according to one of claims 1 - 9, **characterized in that** the overall dwell time for steps (a) and (b) is 5 - 60 minutes.

11. The procedure according to one of claims 1 - 10, **characterized in that** additives are added to the conveyed material.

## Revendications

1. Procédé pour la préparation en continu d'une suspension de cellulose dans le N-méthylmorpholine-N-oxyde (NMMO) aqueux, **caractérisé en ce que** :
(a) on transporte la cellulose en l'absence du N-méthylmorpholine-N-oxyde avec homogénéisation, au travers d'une première zone de cisaillement, et
(b) on transporte la cellulose homogénéisée, après addition de suffisamment de N-méthylmorpholine-N-oxyde aqueux pour qu'on obtienne après mélange, une suspension avec une teneur en N-méthylmorpholine-N-oxyde dans la phase liquide dans l'intervalle allant de 70 à 80% en masse, au travers d'une deuxième zone de cisaillement, où
la cellulose ou la suspension remplit essentiellement complètement la section transversale de transport disponible des zones de cisaillement.

2. Procédé selon la revendication 1, **caractérisé en ce que** le cisaillement et le transport sont réalisés dans les deux zones de cisaillement par plusieurs arbres équipés d'éléments de cisaillement et de transport, disposés dans la direction du transport.

3. Procédé selon la revendication 2, **caractérisé en ce que** l'on prévoit deux à huit arbres pour le cisaillement et le transport.

4. Procédé selon l'une quelconque des revendications 1 à 3, **caractérisé en ce que** l'on met en oeuvre à l'étape (a), une cellulose avec une teneur en eau dans l'intervalle allant de 20 à 80% en masse.

5. Procédé selon l'une quelconque des revendications 1 à 4, **caractérisé en ce que** l'on met en oeuvre à l'étape (a), une cellulose essentiellement séchée.

6. Procédé selon l'une quelconque des revendications 1 à 5, **caractérisé en ce que** l'on met en oeuvre à l'étape (b), un NMMO aqueux avec un rapport molaire NMMO/H₂O dans l'intervalle allant de 1:1 à 1:2,2.

7. Procédé selon l'une quelconque des revendications 1 à 6, **caractérisé en ce que** l'on mélange la cellulose avant la mise en oeuvre dans l'étape (a), avec de l'eau et/ou on fait subir un traitement préalable enzymatique ou hydrothermique.

8. Procédé selon l'une quelconque des revendications 1 à 7, **caractérisé en ce que** l'on réalise les étapes (a) et (b) à une température allant dans l'intervalle allant de 75 à 100°C.

9. Procédé selon l'une quelconque des revendications 1 à 8, **caractérisé en ce que** l'on réalise les deux étapes (a) et (b) en continu, on soutire la suspension en continu de l'étape (b) et on la fait passer dans une étape de dissolution.

10. Procédé selon l'une quelconque des revendications 1 à 9, **caractérisé en ce que** l'on travaille dans les étapes (a) et (b), avec une durée de séjour totale située dans l'intervalle allant de 5 à 60 minutes.

11. Procédé selon l'une quelconque des revendications 1 à 10, **caractérisé en ce que** l'on ajoute des additifs au matériau transporté.
